# FASCICULE DE BREVET EUROPEEN

(11) **EP 0 570 283 B1**
(45) Date de publication et mention de la délivrance du brevet: **16.12.1998**
(21) Numéro de dépôt: 93401215.4
(22) Date de dépôt: 13.05.1993
(51) Int. Cl.: C03C 25/02

(54) **Procédé de fabrication d'un fil continu par étirage mécanique**
Verfahren zur Herstellung von Endlosfasern durch mechanisches Ziehen
Method for the mechanical drawing of a continuous fibre

(30) Priorité: 15.05.1992 FR 9205958
(43) Date de publication de la demande: 18.11.1993
(73) Titulaire: VETROTEX FRANCE, 73000 Chambéry (FR)
(72) Inventeur: Johnson, Timothy, F-73160 Vimines (FR); Moireau, Patrick, F-73230 Saint Alban Leysse (FR)
(74) Mandataire: Breton, Jean-Claude

(56) Documents cités:
- EP-A- 0 243 275
- EP-A- 0 320 873
- EP-A- 0 367 661
- CH-A- 428 082
- CHEMICAL ABSTRACTS, vol. 113, no. 6, 6 Août 1990, Columbus, Ohio, US; abstract no. 45170y, page 274 ;

## Description

La présente invention concerne un procédé de fabrication d'un fil continu formé d'une multiplicité de filaments continus dont au moins une partie est revêtue d'un mélange à l'état liquide qui réagit lorsqu'il est soumis à un rayonnement ultra-violet.

Plus précisément, l'invention vise un procédé de fabrication d'un fil continu formé, au moins en partie, par des filaments destinés à servir de renfort tels que des filaments de verre.

Il est déjà connu d'imprégner une mèche ou un tissu à base de fils de verre par un mélange réagissant lorsqu'il est exposé à un rayonnement ultra-violet. C'est le cas notamment du procédé de fabrication décrit par la demande de brevet français FR-A-2.336.776 et son certificat d'addition FR-A-2.382.079.

D'après ces documents, une mèche de fibres de verre, extraite d'un enroulement, passe dans un bain de mélange réactif avant de défiler parallèlement à un tube émettant un rayonnement ultra-violet. Pour obtenir la polymérisation et la réticulation du mélange imprégnant la mèche, la vitesse de déplacement de cette dernière devant le tube émetteur est relativement faible.

Ce type de procédé indirect n'a d'intérêt que lorsque la limitation de la vitesse de défilement, à moins d'un mètre par seconde, peut être considérée comme un inconvénient mineur par rapport aux avantages qu'il présente par ailleurs.

Il n'en est pas de même dans un procédé direct où le mélange est déposé au cours du procédé de fabrication du fil de verre lui-même et où la vitesse de défilement, supérieure à plusieurs mètres par seconde, est imposée par le procédé.

Ce type de procédé est celui utilisé, par exemple, pour l'obtention des fibres optiques. Chaque fibre optique est obtenue par l'étirage mécanique de l'extrémité d'une préforme ramollie par la chaleur. Dès sa formation, la fibre optique doit être protégée de l'humidité et de tout contact susceptible de provoquer l'apparition de défauts à sa surface. Pour cette raison un mélange réactif est appliqué sur la fibre de manière à la gainer complètement. Immédiatement après le dépôt de ce revêtement, la fibre est exposée à un rayonnement ultra-violet émis par un ou plusieurs tubes, disposés parallèlement à son trajet, avant d'être bobinée. La vitesse d'étirage d'une fibre optique pouvant atteindre 5 à 10 mètres par seconde et la couche du mélange qui doit être déposée n'étant pas négligeable, la vitesse de polymérisation du mélange appliqué doit être élevée. La composition d'un tel mélange comprend des constituants onéreux et son emploi nécessite parfois la prise de mesures de sécurité. Un tel procédé est, par exemple, décrit par le brevet US-A-4.099.837.

Dans le domaine des fils de verre, destinés notamment au renforcement de matières organiques, il est également connu de déposer un mélange réagissant sous l'action d'un rayonnement ultra-violet à la surface des filaments pendant l'opération de fibrage. Les filaments obtenus par étirage mécanique des filets de verre issus des orifices d'une filière, sont revêtus d'un mélange réactif avant d'être rassemblés en un fil qui est exposé à un rayonnement ultra-violet sur une partie de son trajet avant d'être bobiné. Un tel procédé est décrit par le brevet européen EP-B1-243.275.

Ce procédé est intéressant comme tous les procédés directs dans la mesure où il permet d'obtenir un produit en évitant une étape supplémentaire coûteuse en temps, en matière et en espace. Il est toutefois soumis à certaines contraintes.

La vitesse d'étirage des filaments, qui est généralement beaucoup plus élevée que celle des fibres optiques, impose l'emploi de mélanges extrêmement réactifs.

Par ailleurs, la ou les sources de rayonnement ultraviolet utilisées sont réglées de manière à focaliser ledit rayonnement sur une partie du trajet du fil dans une zone étroite. La polymérisation et/ou la réticulation du mélange recouvrant le fil est régulière dans la mesure où il ne s'écarte pas de cette zone. Or, aux vitesses élevées, le fil peut être animé d'un mouvement vibratoire qui va l'écarter légèrement de cette zone, ce qui modifie le taux de conversion du mélange sur une portion du fil.

De plus, la vibration du fil engendre localement la séparation momentanée de filaments ou de groupes de filaments dans la zone d'irradiation. La polymérisation et/ou la réticulation au moins partielle qui intervient pendant cette phase de séparation ne permet pas d'obtenir un fil dont l'intégrité est constante sur toute sa longueur.

La présente invention a pour objet un procédé direct de fabrication d'un fil continu qui élimine les contraintes des procédés connus.

La présente invention a pour objet un procédé direct de fabrication d'un fil continu susceptible d'être revêtu d'un mélange dont la réactivité peut être inférieure à celle exigée habituellement par le procédé direct connu.

La présente invention a également pour objet un procédé direct qui permet d'obtenir un fil dont les caractéristiques sont régulières sur toute sa longueur.

Ces buts sont atteints grâce à un procédé de fabrication d'un fil continu selon lequel on forme une multiplicité de filaments continus par étirage mécanique d'une multiplicité de filets de matière(s) thermoplastique(s) fondue(s) s'écoulant des orifices d'au moins un dispositif, qui consiste à déposer à la surface d'au moins une partie des filaments un mélange à l'état liquide, susceptible de réagir sous l'action d'un rayonnement ultra-violet, avant de les rassembler en au moins un fil, à bobiner ledit fil sous forme d'enroulement sur un support en rotation et à exposer ledit enroulement à un rayonnement ultra-violet pendant l'opération de bobinage.

L'invention s'applique aux procédés de fabrication d'un fil composite ou mixte formé de filaments de matières thermoplastiques différentes.

Ainsi, l'invention s'applique à un procédé de fabrication d'un fil formé par la réunion de filaments continus de verre et d'une matière organique thermoplastique ; les premiers sont obtenus par étirage mécanique de filets de verre fondu s'écoulant des orifices d'une filière chauffée par effet Joule ; les seconds, par étirage mécanique de filets de matière fondue extrudée à travers les orifices d'une tête de filage. Un tel procédé est décrit, par exemple, par la demande de brevet EP-A1-367.661.

Dans le cadre de la présente invention, les filaments de verre sont revêtus d'un mélange réagissant aux ultra-violets avant d'être réunis aux filaments organiques. Le fil mixte est bobiné sur un support en rotation et l'enroulement, depuis le début de sa formation, est exposé à une source de rayonnement ultra-violet.

L'invention s'applique aussi à un procédé de fabrication d'un fil continu formé exclusivement de filaments d'une matière thermoplastique déterminée. Ainsi l'invention s'applique au procédé de fabrication de fil de verre formé d'une multiplicité de filaments continus de verre.

La présente invention offre un très grand intérêt par rapport au procédé direct classique comme le démontre la comparaison suivante.

D'après le procédé direct connu, la polymérisation du mélange est effectuée sur le fil en soumettant ce dernier à un rayonnement émis par une ou plusieurs sources disposées parallèlement à son trajet. Pour une vitesse d'étirage élevée, mais courante dans l'industrie de la fibre de verre dite de renforcement, par exemple 50 mètres par seconde, le temps d'irradiation du fil est de 0,015 seconde en disposant 3 sources de rayonnement ultra-violet en ligne, chaque source comprenant un tube de 25 centimètres de longueur.

A la même vitesse d'étirage, le temps moyen d'irradiation du fil sur l'enroulement en formation est d'environ 0,5 seconde, en utilisant une seule source de rayonnement dirigée vers la surface externe dudit enroulement.

L'augmentation très importante du temps d'irradiation du fil, qui peut atteindre plusieurs secondes, offre la possibilité de faire varier les conditions de fabrication dans des limites inespérées à ce jour pour un procédé direct.

Ainsi, par rapport au procédé direct connu, il est possible, grace à l'invention d'utiliser, à vitesses d'étirage semblables, un mélange beaucoup moins réactif. Cette possibilité élargit considérablement le domaine des formulations de mélange utilisables dans le cadre d'un procédé direct. Ainsi, des produits dont la réactivité est jugée comme insuffisante pour entrer dans la composition d'un mélange utilisé dans un procédé direct classique sont désormais utilisables grâce à la présente invention. Cet avantage est important dans la mesure, notamment, où ces produits sont compatibles avec différentes matières à renforcer. On peut citer, par exemple, les monomères uréthanes monoacrylates qui sont compatibles avec les matières du type polyamides.

Dans la mesure où l'invention permet l'emploi de mélanges moins réactifs, ces mélanges peuvent être plus économiques que ceux utilisés à ce jour dans un procédé direct. Par exemple, les photoamorceurs, terme qui recouvre aussi bien les photoinitiateurs, c'est-à-dire des composés directement responsables de la scission intra-moléculaire, que les photosensibilisateurs, c'est-à-dire les composés provoquant l'activation de la molécule, peuvent être utilisés dans des proportions nettement inférieures à celles des mélanges employés à ce jour pour un procédé direct. Or ces composés sont parmi les constituants les plus onéreux de ces mélanges réactifs.

Ainsi, en guise de photoamorceur, un mélange classique comprendra de préférence de 8 à 12 % en poids de photoinitiateur lorsque la vitesse d'étirage est élevée et/ou lorsque le taux de conversion recherché est important. Pour des vitesses d'étirage et des taux de conversion semblables, les mélanges utilisés dans le cadre de l'invention comprendront seulement de 3 à 5 % de photoinitiateurs.

Comme dans tout procédé de polymérisation il est difficile d'obtenir un taux de conversion supérieur à 75 %. Or, il est important d'atteindre un taux de conversion élevé car ce dernier permet d'améliorer certaines caractéristiques comme, par exemple, la résistance à la traction du fil.

Par ailleurs, lorsque le taux de conversion est relativement faible, le mélange déposé sur le fil peut évoluer de manière incontrôlée en fonction de ses conditions de stockage. Ce phénomène contribue à modifier les propriétés du fil de façon imprévisible.

Grâce notamment à l'augmentation du temps d'irradiation, la présente invention permet d'obtenir des taux de conversion très élevés difficilement accessibles, voire même inaccessibles, dans un procédé direct où le fil est irradié en ligne.

Il est également possible d'utiliser un mélange très réactif qui permettra alors, selon l'invention, d'augmenter la vitesse d'étirage du fil. Cette possibilité permet de fabriquer des produits qui ne pouvaient pas l'être à ce jour, dans le cadre d'un procédé direct, du fait des vitesses d'étirage élevées qu'ils nécessitent.

La présente invention permet également d'atteindre des vitesses d'étirage plus élevées que celles admises dans le cadre du procédé direct connu pour une autre raison. En effet, d'après ce dernier procédé, la stabilité du fil dans la zone de polymérisation est d'autant plus difficile à maintenir que sa vitesse d'étirage est plus élevée, d'où les inconvénients mentionnés précédemment.

La présente invention élimine les inconvénients qui résultent de la vibration du fil dans la mesure où son irradiation est effectuée alors qu'il vient d'être déposé sur l'enroulement, et que la distance entre la surface externe de l'enroulement en formation et la source de rayonnement ultra-violet est bien définie. Ceci permet d'obtenir un fil intègre revêtu d'un mélange dont le taux de conversion est constant sur toute sa longueur.

La présente invention permet également de simplifier les installations qui assurent la mise en oeuvre d'un procédé direct.

Ainsi, dans le procédé direct connu, la polymérisation du mélange réactif peut être menée à bien en multipliant les sources de rayonnement ultra-violet, ce qui permet d'augmenter l'intensité dudit rayonnement en les concentrant au même endroit ou d'augmenter le temps d'irradiation en les disposant en ligne. Dans les mêmes conditions (nature du mélange, vitesse d'étirage, etc...), la présente invention permet d'obtenir un taux de conversion équivalent en utilisant une seule source de rayonnement ultra-violet. Cette source est disposée parallèlement à l'axe de rotation du support sur lequel l'enroulement est bobiné; elle est équipée d'un réflecteur elliptique ou parabolique selon la concentration du rayonnement désirée sur la surface de l'enroulement.

La source peut être munie d'un tube dont la longueur est choisie de manière à irradier l'enroulement en permanence sur toute sa hauteur. Une telle source peut être utilisée pour les enroulements à flancs droits.

La source peut être munie d'un tube dont la longueur est inférieure à la hauteur totale de l'enroulement. C'est notamment le cas des enroulements de grande hauteur, formés sur un support en rotation qui, de surcroît, se déplace selon un mouvement oscillant perpendiculairement au fil. La source est alors maintenue en face de la zone de bobinage du fil et irradie périodiquement l'enroulement en formation.

Il est évidemment possible d'utiliser plusieurs sources dont les tubes sont disposés parallèlement à l'axe du support sur lequel l'enroulement est bobiné. Les rayonnements émis par ces sources peuvent converger vers la même zone superficielle de l'enroulement ou vers des zones distinctes. Ce mode de réalisation multiplie encore les possibilités de réglage offertes par l'invention.

Dans certains cas, l'irradiation de l'enroulement doit être effectuée dans une enceinte qui permet de l'environner d'une atmosphère d'un gaz neutre, tel que l'azote, ou d'éliminer l'ozone produite en présence d'air.

Toutefois, l'augmentation considérable du temps d'irradiation permet de réduire la puissance d'émission des sources de rayonnement ultra-violet, tout particulièrement en présence d'une atmosphère de gaz neutre.

Dans un certain nombre de cas enfin, il est possible d'atteindre un taux de conversion suffisant sans qu'il soit nécessaire d'environner le fil d'une atmosphère de gaz neutre.

D'une manière générale, pour un fil comprenant un pourcentage pondéral de mélange relativement faible, la seule irradiation de l'enroulement permet d'atteindre un taux de conversion suffisant pour éviter un collage important du fil sur ledit enroulement. Pour obtenir sur le fil un pourcentage élevé de mélange, la vitesse d'étirage est généralement réduite et les vibrations subies par le fil sont alors négligeables. De plus, un pourcentage élevé de mélange confère au fil une excellente cohésion. Dans ces conditions, il est recommandé de soumettre le fil, avant son bobinage, au rayonnement d'au moins un irradiateur afin de provoquer un début de polymérisation et/ou de réticulation du mélange avant le contact dudit fil avec l'enroulement. Ceci évite un collage des spires du fil entre elles qui rendrait l'enroulement inutilisable. Une polymérisation beaucoup plus complète peut alors être effectuée grâce à l'irradiation de l'enroulement. En général la perte au feu mesurant ce pourcentage pondéral de mélange est égale ou inférieure à 3%. Au-dessus de cette valeur, les risques de collage entre spires deviennent non négligeables.

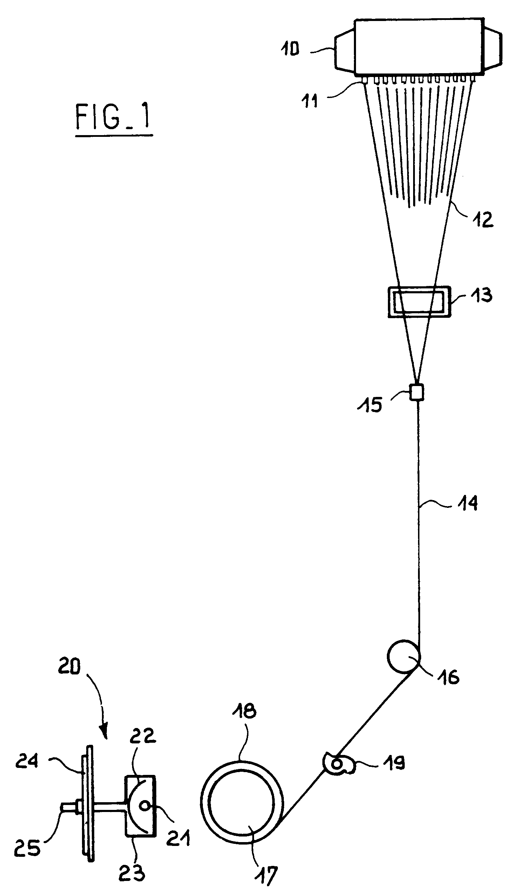

Le procédé selon l'invention sera mieux apprécié grâce à la description détaillée suivante, illustrée par la figure unique en annexe.

Cette figure représente une vue frontale, schématique, d'une installation permettant la mise en oeuvre de l'invention. Elle comprend une filière 10 généralement en alliage métallique chauffée par effet Joule. Cette filière sert à refondre le verre ou à maintenir à l'état fondu le verre provenant d'une source non représentée.

Le fond de la filière 10 est percé d'un grand nombre d'orifices, prolongés ou non par des tubes 11 de faible diamètre, d'où s'écoulent des filets de verre fondu. Ces filets sont étirés mécaniquement pour donner naissance à des filaments continus 12.

Ces filaments 12, formant au moins une nappe en éventail, passent sur un dispositif d'enduction 13 où ils sont recouverts du mélange réactif. Ce dispositif 13, bien connu de l'homme du métier, est constitué d'un applicateur garni d'un feutre humecté de mélange réactif à l'aide d'une pompe doseuse.

Les filaments 12 ainsi revêtus de mélange sont rassemblés en un fil 14 grâce à un organe tel qu'une poulie d'assemblage 15. Ce fil est ensuite guidé par au moins un organe de guidage, par exemple une roulette 16, avant d'être bobiné sur une broche 17 en rotation. Cette broche est mue par un moteur fixé dans un bâti non représenté. Le fil 14 est bobiné sous la forme d'un enroulement 18 grâce à un organe de répartition 19 dudit fil, tel qu'une hélice d'encroisure.

Le fil 14, alors qu'il est en contact avec l'enroulement 18, est soumis à l'action d'un rayonnement ultra-violet grâce au dispositif 20. Ce dispositif comprend un tube émetteur 21 qui peut être à haute, moyenne ou basse pression, excité au moyen d'électrodes ou de micro-ondes. Le tube émetteur peut être dopé par des gaz rares ou des halogénures métalliques et sera essentiellement choisi pour son spectre d'émission.

Le spectre d'émission, comme la nature et la teneur des différents composés qui forment le mélange réactif, ainsi que la quantité d'énergie reçue par l'enroulement, est l'un des facteurs dont le choix permettra d'obtenir le taux de conversion désiré.

Un réflecteur parabolique 22 est monté à l'arrière du tube 21 et focalise le rayonnement sur une zone déterminée de l'enroulement 18. L'ensemble tube/réflecteur est monté sur un boîtier 23 solidaire d'un support 24 par l'intermédiaire d'une tige coulissante 25. Cette tige permet de régler initialement la distance entre le tube 21 et la surface de la broche 17. Lorsque le taux de conversion recherché est très élevé, cette distance est maintenue constante pendant toute l'opération de bobinage. Par contre, lorsque le taux de conversion recherché est inférieur à environ 90 %, il est souhaitable de maintenir une distance constante entre la surface de l'enroulement en formation et l'irradiateur ou de faire varier dans le temps la quantité d'énergie reçue par l'enroulement. Dans le premier cas, l'irradiateur peut être monté sur un bras dont le mouvement d'éloignement de l'axe de la broche 17 est commandé par un dispositif d'asservissement. Dans le second cas, la quantité d'énergie est réglée par un système de volets dont la commande de fermeture est asservie à la vitesse de grossissement de l'enroulement. Le tube 21 est choisi de manière à ce que l'enroulement en formation soit soumis à l'action permanente et uniforme du rayonnement ultraviolet qu'il émet sur une zone qui s'étend sur toute la longueur de l'enroulement.

Le temps pendant lequel le fil est irradié est fonction de la forme de l'enroulement, donc d'une certaine manière de l'organe choisi pour répartir le fil sur ledit enroulement, de la vitesse de bobinage, de la largeur de la zone d'irradiation.

Ce temps peut être réglé en fonction du taux de conversion recherché, taux qui dépend de l'application ultérieure du fil obtenu. Ainsi, toutes conditions égales par ailleurs, ce temps peut être augmenté ou diminué en élargissant ou en rétrécissant la zone d'irradiation, grâce à un système de volets coulissants placés sur l'irradiateur dont le degré d'ouverture commande la largeur du rayonnement émis.

Un exemple comparatif permettra de mieux apprécier les avantages de la présente invention par rapport à un procédé direct selon lequel le fil est irradié en ligne.

### * Fabrication d'un fil selon l'art antérieur :

Un fil de verre est fabriqué à partir d'une filière en alliage de platine-rhodium chauffée par effet Joule et munie de 408 orifices. Le verre alimentant la filière a une composition qui comprend pour l'essentiel de la silice, de l'alumine, des oxydes alcalino-terreux tel que la chaux et éventuellement de la magnésie, de l'anhydride borique. Ce type de verre est généralement connu sous le nom de verre E. Le mélange réactif est déposé sur les filaments en cours d'étirage par l'intermédiaire d'un applicateur garni d'un feutre.

Le fil est soumis successivement sur son trajet, entre deux organes de guidage, au rayonnement ultra-violet émis par trois dispositifs d'irradiation en ligne. Chaque dispositif est muni d'un tube à vapeur de mercure de 25 centimètres de longueur et d'une puissance de 120 watts par centimètre linéaire de tube. Un réflecteur elliptique à l'arrière du tube assure la convergence du rayonnement sur le passage du fil.

Le fil constitué de 408 filaments d'un diamètre moyen de 9 µm présente un titre de 68 tex. L'organe de répartition a été choisi de manière à obtenir un enroulement à flancs droits.

### * Fabrication d'un fil selon l'invention :

Le fil est fabriqué à partir d'une filière identique, alimentée à partir du même verre, dans les mêmes conditions. L'enroulement, également à flancs droits, est irradié par un dispositif muni d'un tube à vapeur de mercure de 40 centimètres de longueur et d'une puissance de 80 watts par centimètre linéaire de tube. Un réflecteur parabolique est placé à l'arrière du tube.

Le mélange appliqué sur les deux fils a la composition suivante, exprimée en pourcentages pondéraux :

| | |
|---|---|
| . Stéarate d'isobutyle | 4,25 % |
| . Silicone acrylate (commercialisé sous la référence Ebecryl 1360 par la société Union Chimique Belge) | 14,25 % |
| . Carbonate diacrylate (commercialisé sous la référence Acticryl CL 993 par la société Harcros) | 14,25 % |
| . N-vinyl pyrrolydone | 33,25 % |
| . Triméthylolpropanetriacrylate éthoxylé (commercialisé sous la référence SR 454 par la société Cray Vallée) | 19,00 % |
| . 1-hydroxyhexyl phénylcétone (commercialisé sous la référence Irgacure 184 par la société Ciba-Geigy) | 10,00 % |
| . Triméthoxysilane éthoxylé (commercialisé sous la référence Silane Y 5889 par la société Union Carbide). | 5,00 % |

La perte au feu sur les deux fils est de l'ordre de 1 %.

La résistance à la traction de chacun des fils a été mesurée sur des éprouvettes de 15 cm de longueur sollicitées en traction à la vitesse de 400 mm/min.

La résistance moyenne à la rupture en traction est respectivement de 1237 MPa pour le fil irradié en ligne et de 1650 MPa pour le fil obtenu selon l'invention.

Le taux de conversion d'un mélange du type précédent est compris entre 60 et 75 % pour le fil irradié en ligne ; il est supérieur à 90 % pour le fil selon l'invention.

L'aptitude au tissage des fils a été testée sur un métier à lance Muller ; elle est médiocre pour le fil irradié en ligne et bonne pour le fil selon l'invention.

Cet exemple est donné à titre illustratif et ne constitue par une limitation. L'invention s'applique à des fils formés à partir d'autres verres, notamment des verres connus pour conférer au fil d'excellentes propriétés mécaniques, chimiques ou diélectriques. Ainsi l'invention s'applique à des fils formés à partir de verres comprenant pour l'essentiel de la silice, de l'alumine, de la chaux et de la magnésie, comme par exemple, celui connu sous la dénomination verre R, ou comprenant essentiellement de la silice, de l'alumine et de la magnésie, comme par exemple, celui connu sous le dénomination verre S.

L'invention s'applique en particulier à des fils formés à partir de verres connus pour leur résistance chimique aux milieux fortement basiques. C'est le cas notamment des fils commercialisés sous la marque "CEMFIL" dont la composition comprend essentiellement de la silice, de l'oxyde de zirconium et des oxydes alcalins.

L'invention s'applique aussi à des fils formés à partir de verres comprenant plus de 90 % en poids de silice et d'anhydride borique, connus pour leurs faibles constante diélectrique et tangente de l'angle de perte tel que le verre D.

L'invention s'applique également à des fils mixtes formés, par exemple, par le rassemblement de filaments de verre E et de filaments organiques thermoplastiques. Un tel fil est fabriqué directement, par exemple, selon le procédé décrit dans la demande de brevet EP-A-367.661. Dans ce type de fil, le nombre et/ou le diamètre des filaments de verre qu'il comprend est (sont) tel(s) que ces derniers représentent généralement entre 10 et 90% en poids dudit fil. La matière organique extrudée et filée est choisie parmi les polypropylènes, les polyamides ou des polyesters.

## Revendications

1. Procédé de fabrication d'un fil continu selon lequel on forme une multiplicité de filaments continus par étirage mécanique d'une multiplicité de filets de matière(s) thermoplastique(s) fondue(s) s'écoulant des orifices d'au moins un dispositif, qui consiste à déposer à la surface d'au moins une partie des filaments un mélange à l'état liquide, susceptible de réagir sous l'action d'un rayonnement ultra-violet, avant de les rassembler en au moins un fil, à bobiner ledit fil sous forme d'enroulement sur un support en rotation et à exposer ledit enroulement à un rayonnement ultra-violet pendant l'opération de bobinage.

2. Procédé selon la revendication 1 selon lequel on forme une multiplicité de filaments continus par étirage mécanique d'une multiplicité de filets d'au moins deux matières thermoplastiques différentes s'écoulant des orifices d'au moins deux dispositifs différents, **caracterisé en ce qu'**on dépose à la surface des filaments d'une desdites matières un mélange à l'état liquide, susceptible de réagir sous l'action d'un rayonnement ultra-violet, on réunit les différents filaments pour former un fil mixte, on bobine ledit fil sur un support en rotation et on expose l'enroulement en formation à un rayonnement ultra-violet.

3. Procédé selon la revendication 2 selon lequel on rassemble en au moins un fil une multiplicité de filaments continus de verre, obtenus par étirage mécanique de filets de verre fondu s'écoulant des orifices d'une filière chauffée par effet Joule, et une multiplicité de filaments continus formés par étirage mécanique de filets de matière organique thermoplastique extrudée à travers les orifices d'une tête de filage, **caracterisé en ce qu'**on dépose le mélange réactif sur les filaments de verre, on les rassemble avec les filaments organiques pour former un fil mixte et on expose l'enroulement dudit fil en formation sur un support en rotation à l'action d'un rayonnement ultra-violet.

4. Procédé selon la revendication 1 selon lequel on forme une multiplicité de filaments continus par étirage mécanique d'une multiplicité de filets de verre fondu s'écoulant des orifices d'au moins une filière chauffée par effet Joule, **caractérisé en ce qu'**on dépose à la surface des filaments de verre un mélange susceptible de réagir sous l'action d'un rayonnement ultra-violet avant de les assembler en au moins un fil, on bobine ledit fil sur un support en rotation et on expose l'enroulement en formation à un rayonnement ultra-violet.

5. Procédé selon l'une des revendications précédentes, **caractérisé en ce que** l'enroulement en formation est exposé à l'action permanente et uniforme du rayonnement ultra-violet dans une zone s'étendant sur toute la longueur de l'enroulement en formation.

6. Procédé selon l'une des revendications 1 à 4, **caractérisé en ce que** l'enroulement est bobiné sur un support en rotation animé d'un mouvement oscillant suivant son axe et soumis à l'action périodique du rayonnement ultra-violet.

7. Procédé selon l'une des revendications précédentes, **caractérisé en ce que** la distance entre la source de rayonnement ultraviolet et la surface de l'enroulement en formation est maintenue constante pendant toute l'opération de bobinage.

8. Procédé selon l'une des revendications 1 à 6, **caractérisé en ce qu'**on règle la quantité d'énergie reçue par l'enroulement irradié en fonction de la vitesse de grossissement dudit enroulement.

## Claims

1. Process for the production of a continuous fibre, according to which formation takes place of a plurality of continuous filaments by the mechanical drawing of a plurality of streams of melted thermoplastic material or materials flowing out of orifices of at least one device, which consists of depositing on the surface of at least part of the filaments a mixture, in the liquid state, able to react under the action of ultraviolet radiation, prior to collecting them together again as at least one fibre, winding said fibre in the form of a winding onto a rotating support and exposing said winding to ultraviolet radiation during the winding operation.

2. Process according to claim 1, according to which a plurality of continuous filaments is formed by the mechanical drawing of a plurality of streams of at least two different thermoplastic materials flowing out of the orifices of at least two different devices, characterized in that on the surface of the filaments of one of said materials is deposited a mixture, in the liquid state, able to react under the action of ultraviolet radiation, the different filaments are combined in order to form a mixed fibre, said fibre is wound onto a rotating support and the winding being formed is exposed to ultraviolet radiation.

3. Process according to claim 2, according to which into at least one fibre is collected a plurality of continuous glass filaments, obtained by the mechanical drawing of melted glass streams flowing out of the orifices of a heated bushing by the Joule effect, and a plurality of continuous filaments formed by mechanical drawing of streams of thermoplastic, organic material extruded through the orifices of a spinning head, characterized in that the reactive mixture is deposited on the glass filaments, they are collected together with the organic filaments to form a mixed fibre and the winding of said fibre being formed on a rotating support is exposed to the action of ultraviolet radiation.

4. Process according to claim 1, according to which formation takes place of a plurality of continuous filaments by the mechanical drawing of a plurality of melted glass streams flowing out of the orifices of at least one bushing heated by the Joule effect, characterized in that on the surface of the glass filaments is deposited a mixture able to react under the action of ultraviolet radiation, prior to the assembling thereof to form at least one fibre, said fibre is wound onto a rotating support and the winding being formed is exposed to ultraviolet radiation.

5. Process according to one of the preceding claims, characterized in that the winding being formed is exposed to the permanent, uniform action of ultraviolet radiation in an area extending over the entire length of the winding being formed.

6. Process according to one of the claims 1 to 4, characterized in that the winding is wound onto a rotating support performing an oscillating movement along its axis and exposed to the periodic action of ultraviolet radiation.

7. Process according to one of the preceding claims, characterized in that the distance between the ultraviolet radiation source and the surface of the winding being formed is kept constant throughout the winding operation.

8. Process according to one of the claims 1 to 6, characterized in that the quantity of energy received by the irradiated winding is regulated as a function of the enlargement speed of said winding.

## Patentansprüche

1. Verfahren zur Herstellung eines endlosen Fadens, gemäß welchem eine Vielzahl endloser Filamente durch mechanisches Ziehen einer Vielzahl von Strahlen aus geschmolzenem/geschmolzenen thermoplastischem/thermoplastischen Stoff/en, die durch die Öffnungen mindestens einer Vorrichtung fließen, gebildet wird und welches darin besteht, auf der Oberfläche von wenigstens einem Teil der Filamente ein Gemisch im flüssigen Zustand- - aufzubringen, das in der Lage ist, bevor sie zu mindestens einem Faden vereinigt werden, unter Einwirkung einer ultravioletten Strahlung zu reagieren, den Faden zur Form einer Spule auf einem sich drehenden Träger aufzuwickeln und die Spule während des Aufwickelns einer ultravioletten Strahlung auszusetzen.

2. Verfahren nach Anspruch 1, gemäß welchem eine Vielzahl endloser Filamente durch mechanisches Ziehen einer Vielzahl von Strahlen aus mindestens zwei unterschiedlichen thermoplastischen Stoffen, die durch die Öffnungen mindestens zweier verschiedener Vorrichtungen fließen, gebildet wird, **dadurch gekennzeichnet, daß** auf der Oberfläche der Filamente aus einem dieser Stoffe ein Gemisch im flüssigen Zustand aufgebracht wird, das in der Lage ist, unter der Einwirkung einer ultravioletten Strahlung zu reagieren, die verschiedenen Filamente vereinigt werden, um einen Mischfaden zu bilden, der Faden auf einem sich drehenden Träger aufgewickelt und die sich bildende Spule einer ultravioletten Strahlung ausgesetzt wird.

3. Verfahren nach Anspruch 2, gemäß welchem eine Vielzahl endloser Glasfilamente, welche durch mechanisches Ziehen von Strahlen aus geschmolzenem Glas erhalten worden sind, die durch die Öffnungen einer mittels Joulescher Wärme beheizten Spinndüse fließen, und eine Vielzahl endloser Filamente, die durch mechanisches Ziehen von Strahlen aus thermoplastischem organischem Stoff gebildet werden, welche durch die Öffnungen eines Spinnkopfes extrudiert worden sind, zu mindestens einem Faden vereinigt werden, **dadurch gekennzeichnet, daß** das Reaktionsgemisch auf den Glasfilamenten aufgebracht wird, diese mit den organischen Filamenten vereinigt werden, um einen Mischfaden zu bilden, und die sich aus diesem Faden auf einem sich drehenden Träger bildende Spule der Einwirkung einer ultravioletten Strahlung ausgesetzt wird.

4. Verfahren nach Anspruch 1, gemäß welchem eine Vielzahl endloser Filamente durch mechanisches Ziehen einer Vielzahl von Strahlen aus geschmolzenem Glas, die durch die Öffnungen mindestens einer mittels Joulescher Wärme beheizten Spinndüse fließen, gebildet wird, **dadurch gekennzeichnet, daß** auf der Oberfläche der Glasfilamente ein Gemisch aufgebracht wird, das in der Lage ist, bevor sie zu mindestens einem Faden vereinigt werden, unter der Einwirkung einer ultravioletten Strahlung zu reagieren, der Faden auf einem sich drehenden Träger aufgewickelt und die sich bildende Spule einer ultravioletten Strahlung ausgesetzt wird.

5. Verfahren nach einem der vorhergehenden Ansprüche, **dadurch gekennzeichnet, daß** die sich bildende Spule der permanenten und gleichmäßigen Einwirkung der ultravioletten Strahlung in einem Bereich ausgesetzt wird, der sich über die gesamte Länge der sich bildenden Spule erstreckt.

6. Verfahren nach einem der Ansprüche 1 bis 4, **dadurch gekennzeichnet, daß** die Spule auf einem sich drehenden Träger aufgewickelt, der mit einer in seiner Achse oszillierenden Bewegung angetrieben wird, und der periodischen Einwirkung der ultravioletten Strahlung ausgesetzt wird.

7. Verfahren nach einem der vorhergehenden Ansprüche, **dadurch gekennzeichnet, daß** der Abstand zwischen der ultravioletten Strahlungsquelle und der Oberfläche der sich bildenden Spule während des gesamten Aufwickelvorgangs konstantgehalten wird.

8. Verfahren nach einem der Ansprüche 1 bis 6, **dadurch gekennzeichnet, daß** die von der bestrahlten Spule aufgenommene Energiemenge in Abhängigkeit von der Zunahmegeschwindigkeit dieser Spule geregelt wird.
